# EUROPÄISCHE PATENTSCHRIFT

(11) **EP 1 270 298 B1**
(45) Veröffentlichungstag und Bekanntmachung des Hinweises auf die Patenterteilung: **20.02.2008**
(21) Anmeldenummer: 02009874.5
(22) Anmeldetag: 02.05.2002
(51) Int. Cl.: B60J 7/00

(54) **Dachanordnung für ein Fahrzeug mit einer am Schiebedeckel angeordneten Blende**
Roof assembly for a vehicle with a blind attached to the sliding roof panel
Toit de véhicule avec un écran d'occultation fixé au panneau de toit coulissant

(30) Priorität: 23.06.2001 DE 10130359
(43) Veröffentlichungstag der Anmeldung: 02.01.2003
(73) Patentinhaber: Dr.Ing. h.c. F. Porsche Aktiengesellschaft, 70435 Stuttgart (DE); CTS Fahrzeug-Dachsysteme GmbH, 74321 Bietigheim-Bissingen (DE)
(72) Erfinder: Doll, Dieter, 71069 Sindelfingen (DE); Armbruster, Reiner, 75417 Mühlacker (DE); Helwich, Dirk, 70374 Stuttgart (DE)

(56) Entgegenhaltungen:
- DE-A- 3 614 880
- DE-C- 19 650 227
- JP-A- 1 282 021

## Beschreibung

Die Erfindung bezieht sich auf eine Dachanordnung für ein Fahrzeug, insbesondere Kraftfahrzeug, gemäß Oberbegriff des Anspruchs 1.

Eine Dachanordnung der vorstehend genannten Art ist aus der JP 01-282021 A, oder aus der DE 36 14 880 A1 bekannt. Zum Verschließen oder zumindest teilweise Freigeben einer Dachöffnung ist ein Deckel vorgesehen, der als Schiebedeckel ausgeführt und an einer Führungseinrichtung seitlich angelenkt ist. Für die Versorgung eines an dem beweglichen Schiebedeckel angeordneten elektrischen Elements, das beispielsweise Energie aufnehmen kann, ist die Dachanordnung mit einer Leitungsführung für eine Anschlussleitung des Elements ausgestattet, welche Leitungsführung als Umlenkrolle für die Anschlussleitung ausgeführt ist. Die Umlenkrolle ist am festen Dachabschnitt gelagert, der die Dachöffnung umgibt.

Aufgabe der Erfindung ist es, eine Dachanordnung der hier angesprochenen Art zu schaffen, bei der die Anschlussleitung einfach an das Energie aufnehmende bzw. abgebende Element heran geführt werden kann.

Gelöst wird diese Aufgabe mit einer Dachanordnung, die die Merkmale des Anspruchs 1 zeigt. Weitere, die Erfindung ausgestaltende Merkmale sind in den Unteransprüchen enthalten.

Die mit der Erfindung hauptsächlich erzielten Vorteile sind darin zu sehen, dass auf eine separate Leitungsführung für die Anschlussleitung verzichtet werden kann und somit kein zusätzlicher Einbauraum benötigt wird, da die Anschlussleitung bei einer Bewegung des Deckels mit der Blende mitgeführt wird. Es ergibt sich außerdem eine einfache Montage der erfindungsgemäßen Leitungsführung, weil die Anschlussleitung zusammen mit der Blende montiert werden kann und mithin beim Einbau der Blende die Anschlussleitung in vorteilhafter Weise mitverlegt wird.

Bei einem Ausführungsbeispiel mit den in Anspruch 4 genannten Merkmalen kann die Anschlussleitung durch einfaches Einschieben in eine Tasche an der Blende befestigt bzw. an der Blende geführt werden. Die Tasche kann - gemäß Anspruch 5 - mit einfachen Mitteln kostengünstig durch Aufnähen oder Aufkleben eines Stoffstreifens an der Blende angebracht werden.

Bevorzugt wird - entsprechend Anspruch 12 - das Element elektrisch betrieben und umfasst insbesondere einen Antriebsmotor für einen somit elektrisch betätigbaren Sonnenschutz, insbesondere ein Rollo, wobei der Motor und der Sonnenschutz vorzugsweise fest am Schiebedeckel angebracht sind und mit diesem bei einer Verstellbewegung mitbewegt werden. Selbstverständlich können mit der erfindungsgemäßen Führung der Anschlussleitung an der Blende auch beliebige andere Elemente kontaktiert werden, die Energie aufnehmen oder Energie abgeben. So könnte als Energie aufnehmendes Element beispielsweise eine sog. elektrochrome Beschichtung am Deckel vorgesehen sein, die die Lichtdurchlässigkeit des Deckels verändert, wie dies beispielsweise in der DE 196 30 812 A1 beschrieben ist. Als Energie abgebende Variante eines Elements sind beispielsweise Solarzellen zu nennen, mit denen der Deckel ausgestattet sein kann, womit sich die DE 198 52 383 A1 befasst. Selbstverständlich ist die erfindungsgemäße Leitungsführung nicht auf eine elektrische Anschlussleitung beschränkt, vielmehr könnten für einen Engergietransport von oder zu dem Element auch Anschlussleitungen für ein gasförmiges oder flüssiges Medium Verwendung finden.

Die Erfindung wird nachfolgend anhand von Ausführungsbeispielen mit Bezug auf die Zeichnung näher erläutert.

### Es zeigen:

- Fig. 1: ein Fahrzeug mit einer Dachanordnung in perspektivischer Ansicht,
- Fig. 2: die Dachanordnung der Fig. 1 in Schnittdarstellung entlang der Linie II - II und
- Fig. 3: die Dachanordnung nach Fig. 1 in geschnittener Ansicht entlang der Linie III - III.

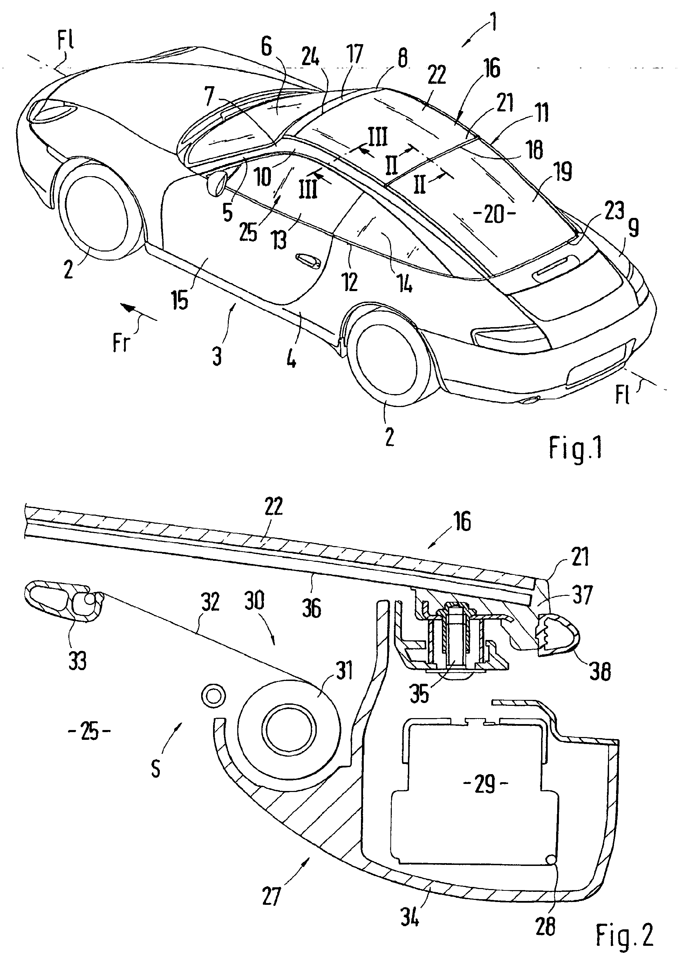

Die Fig. 1 zeigt ein Fahrzeug, insbesondere Personenkraftwagen 1, der einen von Rädern 2 getragenen Aufbau 3 umfasst, der einen Grundkörper 4 und einen Windschutzscheibenrahmen 5 aufweist, in den eine Windschutzscheibe 6 eingesetzt ist. Von dessen oberen Ecken 7 und 8 erstrecken sich in Richtung des Hecks 9 seitliche Dachlängsholme 10 und 11 des Aufbaus 3, die etwa bogenförmig verlaufen, so dass der Aufbau 3 die Form eines Coupes mit Fließheck besitzt. Zwischen den seitlichen Dachlängsholmen 10 und 11 und einer mit Abstand darunter verlaufenden Gürtellinie 12 des Aufbaus 3 sind Seitenscheiben 13 und 14 angeordnet. Ferner ist der Aufbau 3 mit seitlichen Türen ausgestattet, von denen lediglich eine Tür 15 wiedergegeben ist, die die, vorzugsweise rahmenlose, Seitenscheibe 13 trägt.

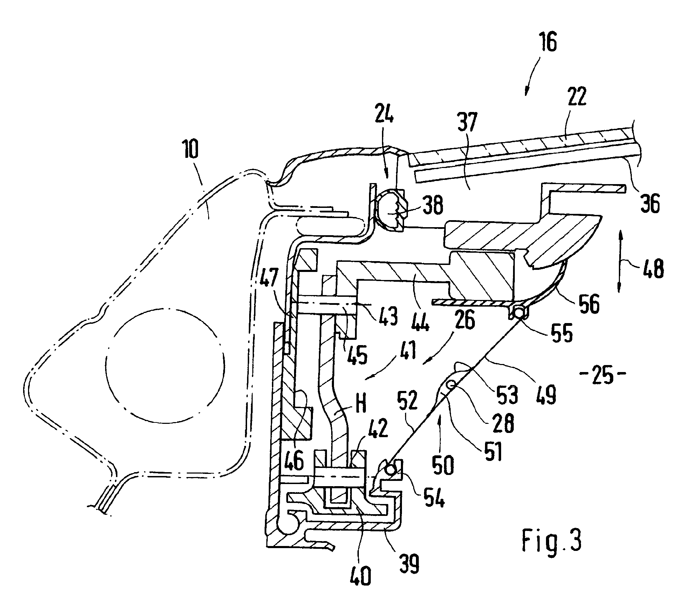

Zwischen den Dachlängsholmen 10 und 11 liegt eine Dachanordnung 16, die sich - in Richtung der Fahrzeuglängsachse FI gesehen - von einem oberen Querrahmenteil 17 des Windschutzscheibenrahmens 5 bis zu einer Vorderkante 18 einer Heckklappe 19 erstreckt, die vorzugsweise eine Scheibe 20 aufweist oder als klappbare Heckscheibe ausgebildet ist und zwischen den Dachlängsholmen 10 und 11 liegt. Die Dachanordnung kann somit auch die Heckklappe 19 umfassen, die sich - Fahrtrichtung Fr gesehen - von einer Hinterkante bzw. einem hinteren Rand 21 eines Deckels 22 der Dachanordnung 16 bis zu einer Vorderkante 23 des Fahrzeughecks 9 erstreckt, wobei diese Vorderkante 23 in der Gürtellinie 12 liegen kann. Die Heckklappe 19 bzw. Scheibe 20 kann zusätzlich zum Deckel 22 der Dachanordnung 16 zugeordnet sein, welcher Deckel 22 zum Verschließen und zumindest teilweise Freigeben einer zwischen den Dachlängsholmen 10 und 11 liegenden Dachöffnung 24 dient, die außerdem zwischen dem Querrahmenteil 17 und Vorderkante 18 der Heckklappe 19 angeordnet ist. Die Dachlängsholme 10 und 11 sowie das Querrahmenteil 17 und die Vorderkante 18 begrenzen die Dachöffnung 24. Die Dachöffnung 24 könnte jedoch auch von dem Querrahmenteil 17 bis zur Vorderkante 23 der Heckpartie 9 reichen und die Scheibe 20 könnte - wie der Deckel 22 - verschiebbar gelagert sein und so einen weiteren Deckel der Dachanordnung 16 bilden. Für das Freigeben der Dachöffnung 24 kann der vordere Deckel 22 nach unten in Richtung des Fahrzeuginnenraums 25 abgesenkt und anschließend unter die Heckklappe 19 verschoben werden. Für die Öffnungs- und Schließbewegung des Deckels 22 ist dieser gemäß Fig. 3 an einer Führungseinrichtung 26 seitlich angelenkt, worauf weiter unten näher eingegangen wird.

Wie aus Fig. 2 ersichtlich, ist dem Deckel 22 ein mit ihm bewegbares Element 27 mit einer Anschlussleitung 28 zugeordnet. Das Element 27 nimmt Energie auf und/oder gibt Energie ab, wofür die, vorzugsweise flexible, Anschlussleitung 28 vorgesehen ist. Ferner wird das Element 27 bevorzugt im Bereich des hinteren Deckelrandes 21 angeordnet. Im gezeigten Ausführungsbeispiel ist das Element 27 ein Energie aufnehmendes Element, welches elektrisch betrieben ist und einen elektrischen Antriebsmotor 29 umfasst. Ferner besitzt das Element 27 einen verlagerbaren bzw. aktivier- und deaktivierbaren Sonnenschutz S, insbesondere ein Rollo 30, welches eine Wickelrolle 31 und eine Rollobahn 32 aufweist, die auf der Wickelrolle 31 bereit gehalten wird. Am freien Ende der Rollobahn 32 ist ein Zugspriegel 33 vorgesehen, der in seitlichen hier nicht dargestellten Führungen geführt sein kann. Der Zugspriegel 33 und/oder die Wickelrolle 31 sind/ist von dem elektrischen Antriebsmotor 29 angetrieben. Das Element 27 kann mit dem Deckel 22 - wie vorstehend erwähnt - zusammen bewegt werden. Hierfür kann eine Kopplung zwischen der Bewegung des Deckels 22 und der des Elements 27 vorgesehen sein. Bevorzugt wird jedoch eine Ausgestaltung, bei der das Element 27 fest mit dem Schiebedeckel 22 verbunden ist und so mit dem Deckel 22 zwangsweise mitbewegt wird. Ein Gehäuse 34 des Elements 27 ist mit dem Schiebedeckel 22 verbunden. Dafür kann ein Befestigungsmittel 35 vorgesehen sein, welches an dem Gehäuse 34 und Deckel 22 angreift, insbesondere an einem an der Innenseite 36 des Schiebedeckel 22 vorgesehenen Stützrahmen 37, an dem überdies eine Dichtung 38 befestigt sein kann, die den Schiebedeckel 22 zur Begrenzung der Dachöffnung 24 hin abdichtet.

Die Führungseinrichtung 26 für den Deckel 22 umfasst seitliche mit Abstand zueinander liegende Führungsschienen, die parallel oder etwa parallel zu den Dachlängsholmen 10 und 11 verlaufen und fest am Fahrzeug angeordnet sind. In Fig. 3 ist lediglich eine Führungsschiene 39 dargestellt ist, in der ein Schlitten 40 eingesetzt ist, der so in Richtung der Fahrzeuglängsachse FI verschieblich geführt ist. Der Schlitten 40 ist mit dem Deckel 22 über eine Hebelanordnung 41 verbunden, die wenigstens einen Hebel H umfasst und die an dem Führungsschlitten 40 in einer ersten Schwenkachse 42 angelenkt ist. Eine zweite Schwenkachse 43 ist an einem Ausstellarm 44 angeordnet, der an dem Deckel 22, insbesondere an dessen Stützrahmen 37, angebracht ist. Die zweite Schwenkachse 43 wird durch einen Bolzen 45 gebildet, der sowohl den abgewinkelten Ausstellarm 44 als auch die Hebelanordnung 41 durchgreift und mit seinem freien Ende in einer Steuerbahn 46 einer Führungskulisse 47 geführt ist, so dass der Deckel 22 bei einer Öffnungsbewegung entlang Pfeilrichtung 48 in Richtung des Innenraums 25 abgesenkt und bei einer Schließbewegung entlang Pfeilrichtung 48 wieder in die Dachöffnung 24 hinein verlagert werden kann. In der abgesenkten Stellung kann der Deckel 22 entlang den Führungsschienen unter die Heckklappe 19 verschoben werden.

Die Führungseinrichtung 26 mit ihrer Hebelanordnung 41 und den seitlichen Führungsschienen 39 ist zum Innenraum 25 hin mittels einer Blende 49 abgedeckt, die mit dem Deckel 22 bewegbar ist. Die vorzugsweise flexible Blende 49 kann aus einem Textilstoff hergestellt sein, und sie bildet eine Leitungsführung 50 für die Anschlussleitung 28, die an der Blende befestigt bzw. geführt ist. Hierfür kann die Blende mit einer Tasche 51 ausgestattet sein, die an der der Führungseinrichtung 26 zugewandten Außenseite 52 der Blende 49 liegen kann. Die Tasche 51 kann auf die Blende 49 aufgenäht oder durch Kleben daran befestigt werden; Tasche 51 und Blende 49 können auch einstückig realisiert sein. Die Tasche 51 kann auch von einem Stoffstreifen 53 gebildet sein, der mit der Blende 49 verbunden wird. Die Blende 49 könnte auch zwei Lagen umfassen, zwischen denen die Tasche 51 ausgebildet ist. Die Tasche 51 kann sich über die - in Fahrzeuglängsrichtung FI gesehen - gesamte Länge der Blende 49 erstrecken; sie kann jedoch auch nur abschnittsweise vorgesehen sein. Für die Befestigung der Anschlussleitung 28 an der Blende können auch mehrere Taschen 51 vorgesehen sein. Es können auch mehrere Anschlussleitungen an der Blende 49 geführt sein. An Stelle der Tasche 51 könnten auch andere Befestigungen, beispielsweise Klammern, für die Anschlussleitung 28 an der Blende 49 angebracht werden. Außerdem wäre es auch möglich, die Anschlussleitung mit einer Befestigungslasche oder dgl. zu versehen.

Die Blende ist im gezeigten Ausführungsbeispiel verschiebefest mit dem Deckel 22 verbunden und in einer als Nut realisierten Längsführung 54 an der Führungsschiene 39 verschieblich geführt. Dadurch kann sie mit dem Deckel 22 mitbewegt werden. Insbesondere ist vorgesehen, dass das deckelseitige Ende 55 der Blende 49 am Stützrahmen 37 oder einer daran befestigten Abdeckung 56 in einer längs verlaufenden Nut 57 eingesetzt ist.

## Patentansprüche

1. Dachanordnung (16) für ein Fahrzeug (1), insbesondere Kraftfahrzeug, mit wenigstens einem Deckel (22) zum Verschließen oder zumindest teilweise freigeben einer Dachöffnung (24), welcher Deckel (22) an einer Führungseinrichtung (26) seitlich angelenkt ist, wobei die Dachanordnung weiterhin ein mit dem Deckel bewegbares Element (27) mit einer Anschlussleitung (28) sowie eine Leitungsführung (50) für die Anschlussleitung (28) aufweist, **gekennzeichnet durch** eine zusammen mit dem Deckel (22) bewegbare Blende (49), die die Führungseinrichtung (26) wenigstens teilweise verdeckt, wobei an der Blende (49) die Anschlussleitung (28) geführt ist.

2. Dachanordnung nach Anspruch 1, **dadurch gekennzeichnet, dass** die Blende (49) flexibel ist.

3. Dachanordnung nach Anspruch 1 oder 2, **dadurch gekennzeichnet, dass** die Blende (49) eine Stoffblende ist.

4. Dachanordnung nach einem der vorhergehenden Ansprüche, **dadurch gekennzeichnet, dass** die Blende (49) wenigstens eine Tasche (51) aufweist, in der die Anschlussleitung (28) liegt.

5. Dachanordnung nach einem der vorhergehenden Ansprüche, **dadurch gekennzeichnet, dass** die Tasche (51) an der Blende (49) aufgenäht oder festgeklebt ist.

6. Dachanordnung nach Anspruch 5, **dadurch gekennzeichnet, dass** die Tasche (51) durch einen Stoffstreifen (53) gebildet wird.

7. Dachanordnung nach einem der vorhergehenden Ansprüche, **dadurch gekennzeichnet, dass** die Blende (49) an der Führungseinrichtung (26) verschieblich geführt ist.

8. Dachanordnung nach einem der vorhergehenden Ansprüche, **dadurch gekennzeichnet, dass** die Blende (49) am Deckel (22) befestigt ist.

9. Dachanordnung nach Anspruch 1 oder 7, **dadurch gekennzeichnet, dass** die Führungseinrichtung (26) seitliche Führungsschienen (39) aufweist, an denen der Deckel (22) geführt ist.

10. Dachanordnung nach Anspruch 9, **dadurch gekennzeichnet, dass** die Führungseinrichtung (26) eine Hebelanordnung (41) mit wenigstens einem Hebel (H) je Führungsschiene (39) aufweist, dass für jede Führungsschiene (39) eine Blende (49) vorgesehen ist und dass die Blende (49) den Hebel (H) und wenigstens teilweise die Führungsschiene (39) verdeckt.

11. Dachanordnung nach einem der vorhergehenden Ansprüche, **dadurch gekennzeichnet, dass** die Anschlussleitung (28) an der der Führungseinrichtung (26) zugewandten Außenseite (52) der Blende (49) angeordnet ist.

12. Dachanordnung nach Anspruch 1, **dadurch gekennzeichnet, dass** das Element (27) elektrisch betrieben ist.

13. Dachanordnung nach Anspruch 1 oder 12, **dadurch gekennzeichnet, dass** das Element (27) einen verlagerbaren Sonnenschutz (S) und einen Antriebsmotor (29) für den Sonnenschutz (S) umfasst.

14. Dachanordnung nach zumindest einem der Ansprüche 1, 12 oder 13, **dadurch gekennzeichnet, dass** das Element (27) im Bereich des - in Fahrtrichtung (Fr) gesehen - hinteren Randes (21) des Deckels (22) befestigt ist.

## Claims

1. Roof assembly (16) for a vehicle (1), in particular motor vehicle, with at least one panel (22) for closing or at least partially opening up a roof opening (24), which panel (22) is coupled laterally to a guide device (26), the roof assembly furthermore having an element (27) which is movable together with the panel and has a connecting line (28), and a line guide (50) for the connecting line (28), **characterized by** a blind (49) which is movable together with the panel (22) and at least partially covers the guide device (26), with the connecting line (28) being guided on the panel (49).

2. Roof assembly according to Claim 1, **characterized in that** the blind (49) is flexible.

3. Roof assembly according to Claim 1 or 2, **characterized in that** the blind (49) is a fabric blind.

4. Roof assembly according to one of the preceding claims, **characterized in that** the blind (49) has at least one pocket (51) in which the connecting line (28) lies.

5. Roof assembly according to one of the preceding claims, **characterized in that** the pocket (51) is sewn or adhesively bonded on the blind (49).

6. Roof assembly according to Claim 5, **characterized in that** the pocket (51) is formed by a fabric strip (53) .

7. Roof assembly according to one of the preceding claims, **characterized in that** the blind (49) is guided displacably on the guide device (26).

8. Roof assembly according to one of the preceding claims, **characterized in that** the blind (49) is fastened to the panel (22).

9. Roof assembly according to Claim 1 or 7, **characterized in that** the guide device (26) has lateral guide rails (39) on which the panel (22) is guided.

10. Roof assembly according to Claim 9, **characterized in that** the guide device (26) has a lever arrangement (41) with at least one lever (H) per guide rail (39), **in that** a blind (49) is provided for each guide rail (39), and **in that** the blind (49) covers the lever (H) and at least partially covers the guide rail (39).

11. Roof assembly according to one of the preceding claims, **characterized in that** the connecting line (28) is arranged on the outside (52) of the blind (49), which side faces the guide device (26).

12. Roof assembly according to Claim 1, **characterized in that** the element (27) is operated electrically.

13. Roof assembly according to Claim 1 or 12, **characterized in that** the element (27) comprises a displaceable sun guard (S) and a driving motor (29) for the sun guard (S).

14. Roof assembly according to at least one of Claims 1, 12 or 13, **characterized in that** the element (27) is fastened in the region of the edge (21) of the panel (22) which is at the rear - as seen in the direction of travel (Fr).

## Revendications

1. Agencement de toit (16) pour un véhicule (1), notamment un véhicule automobile, comprenant au moins un panneau de toit (22) pour fermer ou au moins libérer en partie une ouverture de toit (24), lequel panneau de toit (22) est articulé latéralement à un dispositif de guidage (26), l'agencement de toit présentant en outre un élément (27) déplaçable avec le panneau de toit, comprenant une conduite de raccordement (28) ainsi qu'un guidage de conduite (50) pour la conduite de raccordement (28), **caractérisé par** un écran d'occultation (49) déplaçable conjointement avec le panneau de toit (22), qui occulte au moins partiellement le dispositif de guidage (26), la conduite de raccordement (28) étant guidée sur l'écran d'occultation (49).

2. Agencement de toit selon la revendication 1, **caractérisé en ce que** l'écran d'occultation (49) est flexible.

3. Agencement de toit selon la revendication 1 ou 2, **caractérisé en ce que** l'écran d'occultation (49) est un écran en étoffe.

4. Agencement de toit selon l'une quelconque des revendications précédentes, **caractérisé en ce que** l'écran d'occultation (49) présente au moins une poche (51) dans laquelle on dispose la conduite de raccordement (28).

5. Agencement de toit selon l'une quelconque des revendications précédentes, **caractérisé en ce que** la poche (51) est cousue ou collée fixement sur l'écran d'occultation (49).

6. Agencement de toit selon la revendication 5, **caractérisé en ce que** la poche (51) est formée par une bande d'étoffe (53).

7. Agencement de toit selon l'une quelconque des revendications précédentes, **caractérisé en ce que** l'écran d'occultation (49) est guidé de manière coulissante sur le dispositif de guidage (26).

8. Agencement de toit selon l'une quelconque des revendications précédentes, **caractérisé en ce que** l'écran d'occultation (49) est fixé sur le panneau de toit (22).

9. Agencement de toit selon la revendication 1 ou 7, **caractérisé en ce que** le dispositif de guidage (26) présente des rails de guidage latéraux (39) sur lesquels est guidé le panneau de toit (22).

10. Agencement de toit selon la revendication 9, **caractérisé en ce que** le dispositif de guidage (26) présente un agencement de levier (41) avec au moins un levier (H) par rail de guidage (39), **en ce que** pour chaque rail de guidage (39) un écran d'occultation (49) est prévu et **en ce que** l'écran d'occultation (49) occulte le levier (H) et au moins en partie le rail de guidage (39).

11. Agencement de toit selon l'une quelconque des revendications précédentes, **caractérisé en ce que** la conduite de raccordement (28) est disposée du côté extérieur (52) de l'écran d'occultation (49) tourné vers le dispositif de guidage (26).

12. Agencement de toit selon la revendication 1, **caractérisé en ce que** l'élément (27) est entraîné électriquement.

13. Agencement de toit selon la revendication 1 ou 12, **caractérisé en ce que** l'élément (27) comprend un pare-soleil déplaçable (S) et un moteur d'entraînement (29) pour le pare-soleil (S).

14. Agencement de toit selon au moins l'une quelconque des revendications 1, 12 ou 13, **caractérisé en ce que** l'élément (27) est fixé dans la région du bord arrière (21) - vu dans la direction de conduite (Fr) - du panneau de toit (22).
